# EUROPEAN PATENT SPECIFICATION

(11) **EP 0 430 850 B1**
(45) Date of publication and mention of the grant of the patent: **19.10.1994**
(21) Application number: 90610071.4
(22) Date of filing: 28.11.1990
(51) Int. Cl.: A63H 33/04, G09B 23/00

(54) **A toy building set for building an engine construction**
Spielzeug-Bausatz zum Bau einer Motorkonstruktion
Jeu de construction pour construire une structure de moteur

(30) Priority: 29.11.1989 DK 6017/89
(43) Date of publication of application: 05.06.1991
(73) Proprietor: LEGO A/S, DK-7190 Billund (DK); Interlego AG, CH-6340 Baar (CH)
(72) Inventor: Poulsen, Ole Vestergaard, DK-7100 Vejle (DK)
(74) Representative: Wittrup, Flemming

(56) References cited:
- DE-C- 566 731
- DK-B- 138 205
- DK-B- 148 031
- NO-B- 116 709

## Description

The invention concerns a toy building set for building an engine construction comprising separate cylinder parts with through bores for reception of movable pistons, and comprising crankshaft elements as well as a connecting rod.

The toy building set is moreover adapted to cooperate with other, interconnectible toy elements having coupling means which are arranged with a mutual modular distance.

The object of the invention is to provide a toy building set of the said type which both provides many building possibilities and also fits into the modular building system.

This object is achieved in that the connecting rod for the toy building set is constructed as stated in the characterizing portion of the claim 1, it being possible to build boxer engines or V-engines with just a single connecting rod element where a pair of cylinders are flush in an axial plane with the associated crank bearings axially displaced with respect to each other. When several connecting rod elements are used, also radial engines may be built where the cylinder axes are disposed in one plane.

In real internal combustion engines the axial displacement of the crank bearings is provided by displacing the cylinders correspondingly to avoid strong excentric loads on the parts. For toy use, the loads are no problem, but the excentric construction is instead a surprisingly great advantage so that the engine building set lives up to the well-known, great flexibility which can be obtained with modular building toys.

The connecting rod might be journaled asymetrically in the piston in one embodiment; however, in the preferred embodiment, stated in claim 2, the connecting rod is journaled symmetrically in the piston.

Claim 3 defines an expedient detail in the piston bearing means, where the ball head permits rotation of the connecting rod around its axis with a view to turning the crank bearing means to the correct side of the piston axial plane mentioned in claim 1.

The invention will be explained more fully by the following description of an embodiment with reference to the drawing, in which
figs. 1 and 2 show a toy model of a V-6 engine in top and bottom view respectively, while
figs. 3-8 perspectively show loose parts for the engine building set, viz. a cylinder block, a piston (seen from below), a connecting rod in perspective and lateral view respectively, as well as two crankshaft elements.

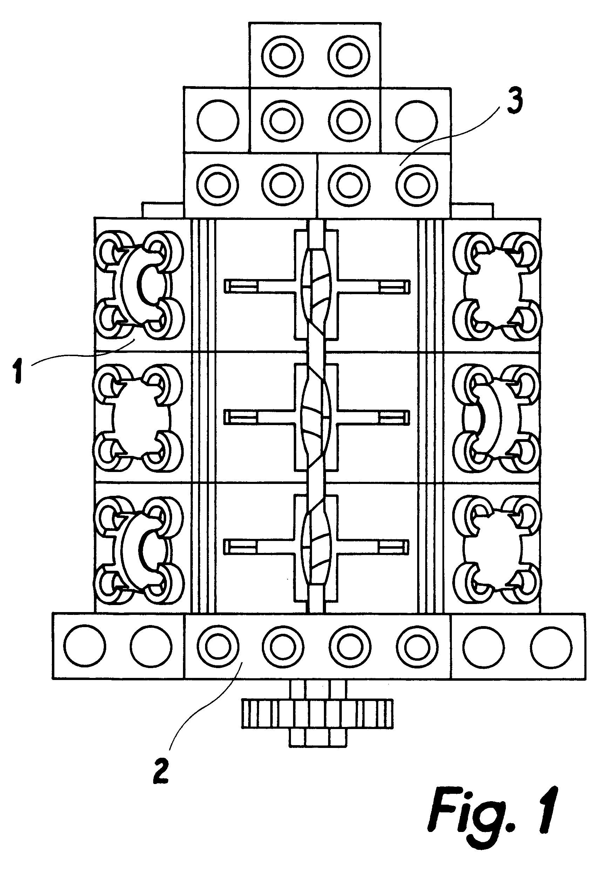

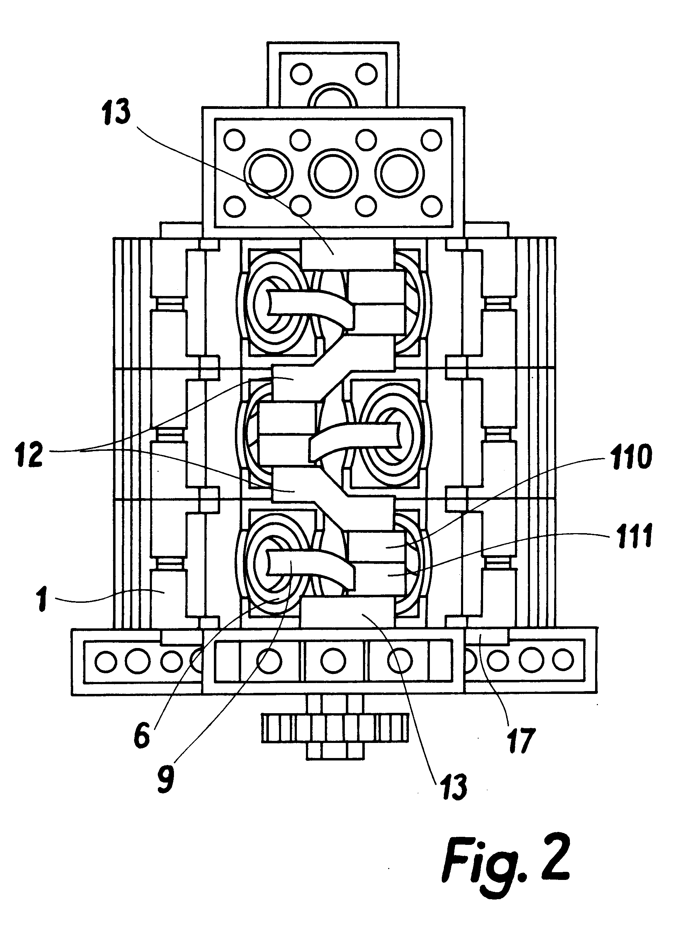

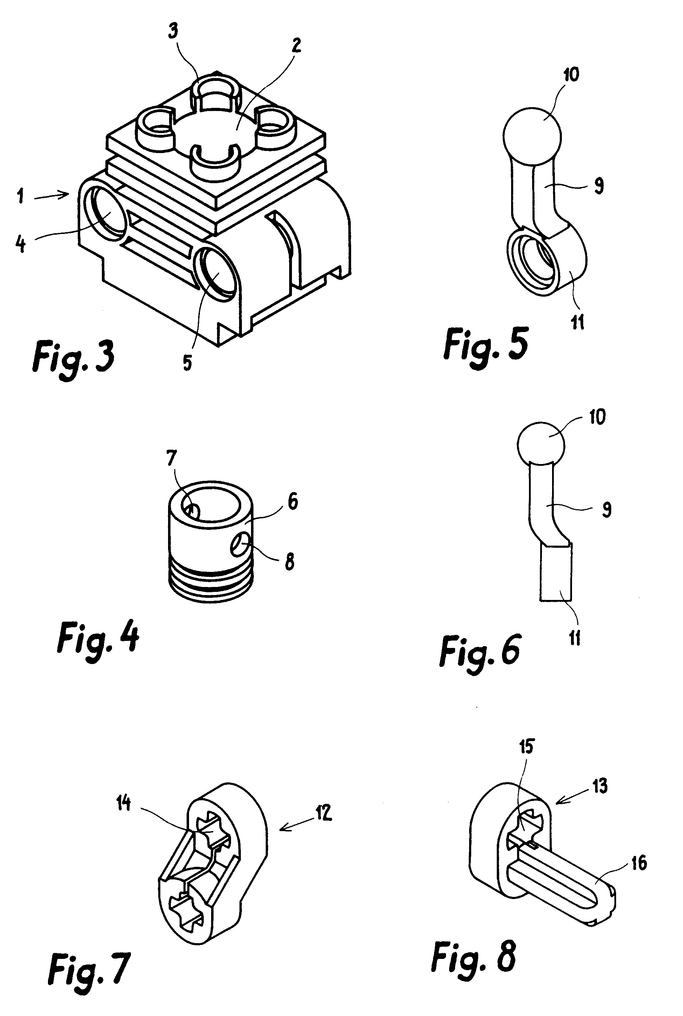

Fig. 1 shows six cylinders 1 mounted in two rows, corresponding to a V-6 engine. The two rows of cylinders are assembled between other building elements such as 2 and 3. Such building elements are well known, cf. the lower side of the building elements shown in fig. 2, and will therefore not be explaind in more detail. However, the modular building system is an essential condition of the invention, it being appreciated that it is a great advantage - and almost necessary that the cylinders 1 may be arranged such that they are positioned in pairs in planes transversely to the crankshaft. Before fig. 2 is described, the individual engine parts will first be explained briefly with reference to figs. 3-8.

Fig. 3 shows a cylinder block 1 with a cylindrical through bore 2 for reception of a piston. The cylinder top is formed with four partially cut coupling studs 3 of the same type and with the same modular distances as is the case with the building elements 2 and 3 from fig. 1. Further, through holes 4, 5 are provided to receive assembling bushings serving as stay bolts, so that the cylinder blocks may be assembled as shown in fig. 1, with the bushings (see 17 in fig. 2) extending into holes in the building elements 2 and 3.

Fig. 4 shows a piston 6 seen obliquely from below, from which it appears that the piston is downwardly open to receive a connecting rod (see figs. 5 and 6). The piston has a pair of diametrically arranged holes 7, 8 for cooperation with the connecting rod.

Figs. 5 and 6 show an embodiment of the connecting rod of the invention. The connecting rod 9 has a ball head 10 adapted to cooperate with the internal rim of the holes 7 and 8 in the piston 6. According to the invention, the crank bearing 11 of the connecting rod 9 is laterally displaced with respect to the ball head 10, so that the crank bearing 11 may be caused to be positioned at one or the other side of a piston axial plane merely by turning the connecting rod in the ball head bearing around the axis of the connecting rod.

Figs. 7 and 8 show a pair of crankshaft elements 12 and 13, each of which having cross sectionally cruciform holes 14 and 15 to receive cruciform shafts like the one designated 16 in fig. 8.

Fig. 2 shows the engine model from fig. 1 from below, and has reference numerals for the parts explained in connection with figs. 3-8. It will now be appreciated that a pair of cylinder blocks 1 may be disposed in a radial plane of the crankshaft and with the ball heads 10 of the connecting rod symmetrically journaled in the pistons 6 when the respective crank bearings 110 and 111 are axially displaced in accordance with the invention.

## Claims

1. A toy building set for building an engine construction comprising separate cylinder (1) parts with through bores (2) to receive pistons (6) movable therein and comprising crankshaft elements (12, 13) as well as a connecting rod (9), **characterized** in that the connecting rod (9) has a piston bearing means (10) and a crank bearing means (11) which are mutually displaced such that the crank bearing means (11) is positioned entirely at one side of a piston axial plane, transversely to the crankshaft.

2. A toy building set according to claim 1, **characterized** in that the connecting rod (9) is adapted to be journaled in the axis of the piston, and that the crank bearing (11) is displaced with respect to this.

3. A toy building set according to claim 1 or 2, **characterized** in that the piston bearing means (10) is a ball head for cooperation with a pair of diametrically disposed rims (7, 8) in the internal wall of the downwardly open cylinder.

## Patentansprüche

1. Ein Spielzeugbausatz zum Bau einer Motorkonstruktion, aufweisend separate Zylinderteile (1) mit Durchgangsbohrungen (2), um Kolben (6) aufzunehmen, die in diesen bewegbar sind, und aufweisend Kurbelelemente (12, 13) sowie eine Verbindungsstange (9), dadurch gekennzeichnet, daß die Verbindungsstange (9) eine Kolbenlagerung (10) und eine Kurbellagerung (11) aufweist, welche zueinander so versetzt sind, daß die Kurbellagerung (11) vollkommen zu einer Seite einer axialen Kolbenebene im rechten Winkel zur Kurbelwelle angeordnet ist.

2. Ein Spielzeugbausatz nach Anspruch 1, dadurch gekennzeichnet, daß die Verbindungsstange (9) so ausgebildet ist, daß sie in der Achse des Kolbens gelagert ist, und daß die Kurbellagerung (11) im bezug auf diese versetzt angeordnet ist.

3. Ein Spielzeugbausatz nach Anspruch 1 oder 2, dadurch gekennzeichnet, daß die Kolbenlagerung (10) einen Kugelkopf zur Zusammenarbeit mit einem Paar von diametral gegenüberliegenden Ringausnehmungen (7, 8) in der inneren Wand des nach unten offenen Zylinders ausgebildet ist.

## Revendications

1. Jeu de construction pour construire une structure de moteur comprenant des parties de cylindre séparées (1) avec des trous traversants (2) pour recevoir des pistons (6) qui peuvent s'y déplacer et comprenant des éléments de vilebrequin (12, 13) ainsi qu'une bielle (9), caractérisé en ce que la bielle (9) a un moyen à palier de piston (10) et un moyen à palier de vilebrequin (11) qui sont décalés mutuellement de telle sorte que le moyen à palier de vilebrequin (11) soit disposé entièrement sur un côté du plan axial du piston, transversalement au vilebrequin.

2. Jeu de construction selon la revendication 1, caractérisé en ce que la bielle (9) est à même d'être tourillonnée dans l'axe du piston et en ce que le palier de manivelle (11) est décalé par rapport à celui-ci.

3. Jeu de construction selon la revendication 1 ou 2, caractérisé en ce que le moyen à palier de piston (10) est une tête à bille susceptible de coopérer avec une paire de bords (7, 8) disposés diamétralement dans la paroi interne du cylindre ouvert vers le bas.
